# EUROPÄISCHE PATENTANMELDUNG

(11) **EP 1 708 183 A1**
(43) Veröffentlichungstag der Anmeldung: **04.10.2006**
(21) Anmeldenummer: 05102532.8
(22) Anmeldetag: 31.03.2005
(51) Int. Cl.: G11B 7/09

(54) **Aktuator für optischen Abtaster**

(71) Anmelder: DEUTSCHE THOMSON-BRANDT GMBH, 78048 Villingen-Schwenningen (DE)
(72) Erfinder: Bammert, Michael, 78739 Hardt (DE); Suzuki, Tsuneo, 78087 Mönchweiler (DE); Dupper, Rolf, 78050 Villingen-Schwenningen (DE)
(74) Vertreter: Thies, Stephan

(57) **Zusammenfassung**

Die vorliegende Erfindung betrifft einen Aktuator (2) für einen Abtaster (1) für optische Speichermedien, sowie ein Gerät zum Lesen und/oder Beschreiben optischer Speichermedien, das einen solchen Aktuator verwendet.

Die Erfindung schlägt einen Aktuator (2) für einen optischen Abtaster (1) vor, mit einem Linsenhalter (3) zum Halten einer Objektivlinse (7) und gedruckten Spulen (5, 6) zur Fokus- und Spurfolgeregelung, wobei jeweils sechs gedruckte Spulen (5, 6) auf zwei gegenüberliegenden Seiten des Linsenhalters (3) angeordnet sind und mit zugeordneten Magneten (4) mit jeweils sechzehn Polen zusammenwirken.

## Beschreibung

Die vorliegende Erfindung betrifft einen Aktuator für einen Abtaster für optische Speichermedien, sowie ein Gerät zum Lesen und/oder Beschreiben optischer Speichermedien, das einen solchen Aktuator verwendet.

In der Regel verwenden Aktuatoren für optische Abtaster gewickelte Spulen in Kombination mit Permanentmagneten, um einen Lichtstrahl zum Lesen und/oder Beschreiben eines optischen Speichermediums auf eine Informationsschicht des optischen Speichermediums zu fokussieren. Der Aktuator regelt dabei sowohl die Spurlage (Tracking) als auch die Fokustiefe (Focusing) des Fokus relativ zu einer Datenspur in der Informationsschicht des optischen Speichermediums.

Anstelle von gewickelten Spulen werden für Aktuatoren auch gedruckte Spulen verwendet. Hierbei handelt es sich um Leiterplatten mit aufgedruckten Kupferbahnen, d.h. die Kupferbahnen verlaufen parallel zum Magneten. Prinzipiell funktioniert dieses Prinzip gleich dem der gewickelten Spulen. Vorteile der gedruckten Spulen sind u.a. ein einfacher Prozess beim Zusammenbau des Aktuators, eine Einsparung an Wickelmaschinen und eine geringere zweite Resonanz des Aktuators. Allerdings sind herkömmliche Spulen sehr viel variabler, was die Drahtdicke und die Anzahl der Wicklungen angeht. Bei gedruckten Spulen ist die für die Bedruckung der Leiterplatten verfügbare Fläche begrenzt, und auch der Abstand der einzelnen Bahnen darf eine gewisse Größe nicht unterschreiten. Somit ist die Anzahl der Bahnen beschränkt. Mit gewickelten Spulen lässt sich deshalb gegenüber gedruckten Spulen eine höhere Empfindlichkeit des Aktuators erreichen.

Es ist eine Aufgabe der Erfindung, einen Aktuator für einen optischen Abtaster vorzuschlagen, der gedruckte Spulen verwendet und zugleich eine verbesserte Empfindlichkeit aufweist.

Erfindungsgemäß wird diese Aufgabe gelöst durch einen Aktuator für einen optischen Abtaster mit einem Linsenhalter zum Halten einer Objektivlinse und gedruckten Spulen zur Fokus- und Spurfolgeregelung, wobei jeweils sechs gedruckte Spulen auf zwei gegenüberliegenden Seiten des Linsenhalters angeordnet sind und mit zugeordneten Magneten mit jeweils sechzehn Polen zusammenwirken.
Durch die spezielle Magnetisierung ist es möglich, eine größere Fläche des Linsenhalters für die Anordnung von gedruckten Spulen zu nutzen. Auf zwei gegenüberliegenden Seiten des Linsenhalters ist jeweils ein Magnet angebracht, der 16-polig magnetisiert ist. Alternativ können es auch jeweils zwei oder mehr Magnete sein, die entsprechend magnetisiert sind und zusammengeklebt werden. Durch die Verwendung von sechzehn Polen und eine geeignete Formgebung der Magnete können auf den beiden Seiten des Linsenhalters jeweils sechs gedruckte Spulen angeordnet sein. Im Vergleich zu bestehenden Aktuatoren mit gedruckten Spulen wird eine Erhöhung der Empfindlichkeit von 20-30% erreicht.

Vorzugsweise werden auf den beiden Seiten des Linsenhalters jeweils vier gedruckte Spulen für die Fokusregelung und jeweils zwei gedruckte Spulen für die Spurfolgeregelung verwendet. Durch eine entsprechend gewählte Bestromung der Spulen können die Fokusspulen optional auch für eine Kipp-Funktion (Tilt) verwendet werden.

Vorteilhafterweise verläuft die Polteilung der Magnete zumindest teilweise schräg zu den für die Spurfolgeregelung vorgesehenen gedruckten Spulen. Dies ermöglicht eine Optimierung der 16-poligen Magnetisierung, indem die störenden Einflüsse der Magnete für die Fokusspulen nun für die danebenliegende Spurfolgespulen geringer ist. Auf diese Weise werden die Empfindlichkeitsverluste so gering wie möglich gehalten.

Vorzugsweise wird ein erfindungsgemäßer Aktuator in einem Gerät zum Lesen und/oder Beschreiben optischer Speichermedien verwendet.

Zum besseren Verständnis soll die Erfindung nachfolgend anhand der Figuren 1 bis 10 erläutert werden. Gleiche Bezugszeichen bezeichnen dabei gleiche Elemente. Es zeigen:
- Fig. 1:: einen Abtaster für optische Speichermedien, der einen erfindungsgemäßen Aktuator verwendet;
- Fig. 2:: den Abtaster aus Fig. 1 nach dem Entfernen einer Abdeckung;
- Fig. 3:: eine weitere Ansicht des optischen Abtasters aus Fig. 2;
- Fig. 4:: einen Aktuator gemäß der Erfindung ohne Magneten;
- Fig. 5:: den Aktuator gemäß der Erfindung mit Magneten;
- Fig. 6:: eine Explosionszeichnung des Aktuators mit Magneten;
- Fig. 7:: die für die Spurfolge- und Fokusregelung relevanten Teile der gedruckten Spulen;
- Fig. 8:: eine schematische Erläuterung zur abgeschrägten Polteilung;
- Fig. 9:: eine schematische Darstellung der Magnetpole; und
- Fig. 10:: eine Explosionszeichnung eines Aktuators mit Magneten gemäß dem Stand der Technik.

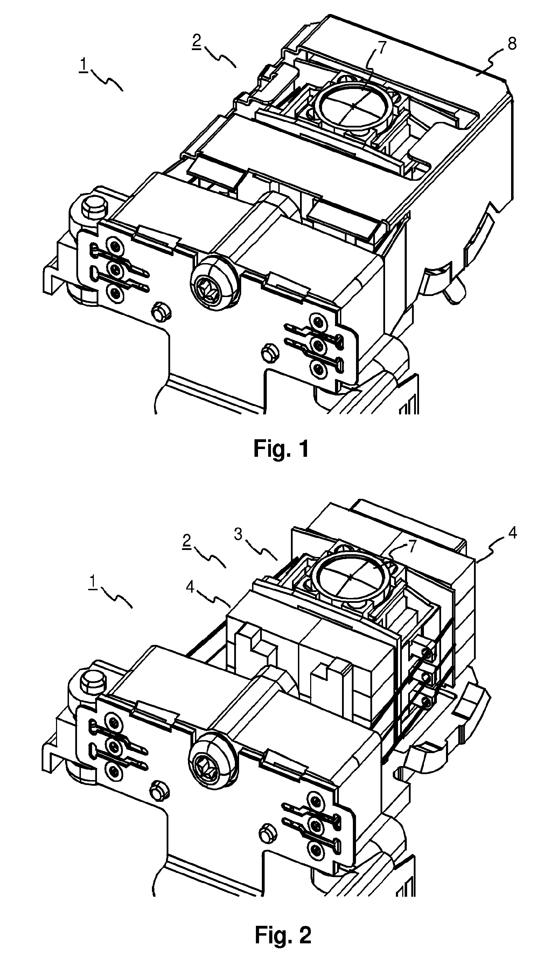

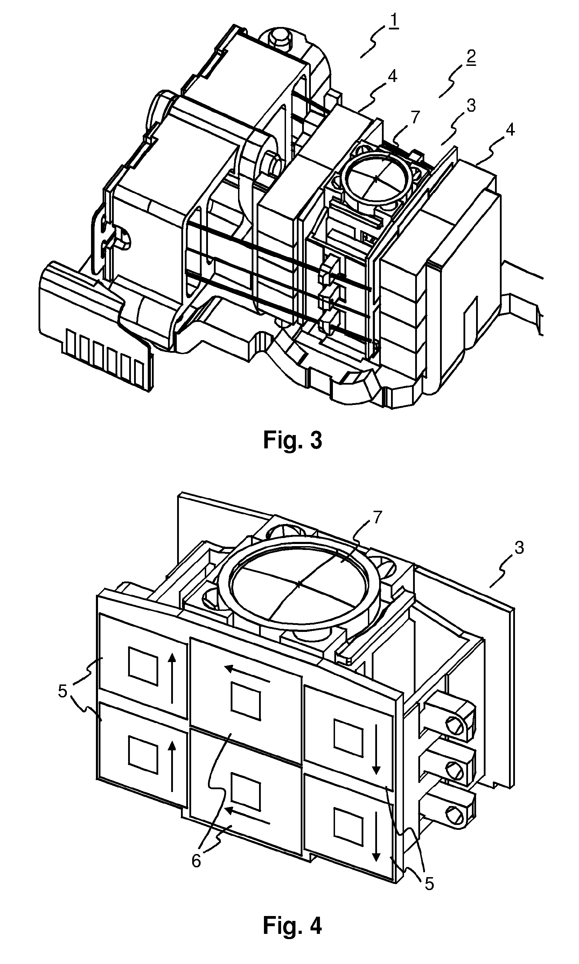

Fig. 1 zeigt einen Abtaster 1 für optische Speichermedien, der einen erfindungsgemäßen Aktuator 2 zur Fokus- und Spurfolgeregelung durch die vertikale und horizontale Verschiebung einer Objektivlinse 7 verwendet. In der Figur ist der Aktuator 2 teilweise durch eine Abdeckung 8 verdeckt. Der optische Abtaster 1 nach dem Entfernen der Abdeckung 8 ist in Fig. 2 dargestellt. Wie nun zu sehen ist umfasst der Aktuator 2 einen Linsenhalter 3 zum Halten der Objektivlinse 7 und zwei seitlich des Linsenhalters 3 angeordnete Magnete 4, die mit zugeordneten gedruckten Spulen 5, 6 (in Fig. 2 nicht zu sehen) für die Fokus- und Spurfolgeregelung zusammenwirken. Eine Ansicht des optischen Abtasters 1 aus einer anderen Perspektive zeigt Fig. 3. Weitere Elemente des optischen Abtasters 1 sind dem Fachmann bekannt und sollen hier nicht näher erläutert werden.

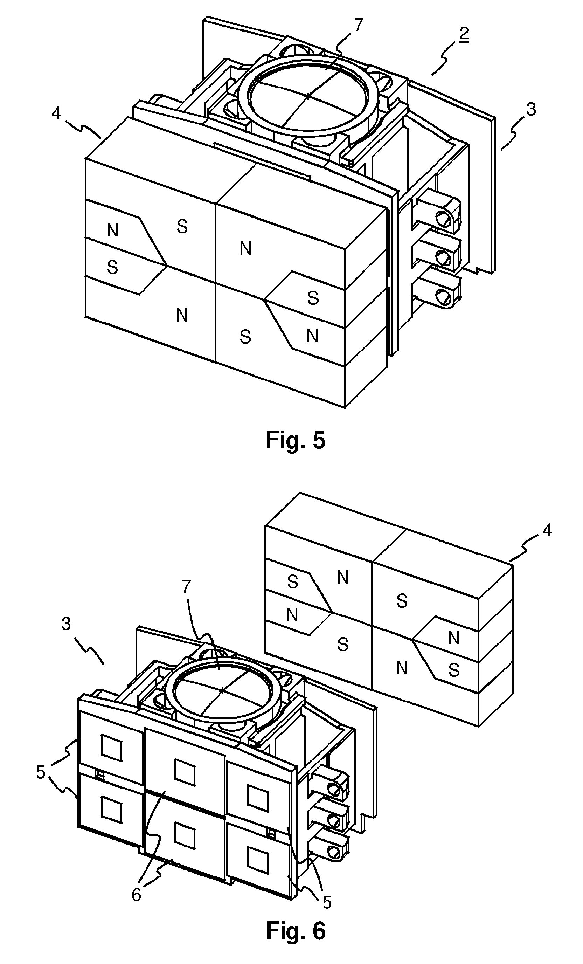

In Fig. 4 ist der Linsenhalter 3 mit den gedruckten Spulen 5, 6, d.h. der Aktuator 2 ohne Magnete 4 dargestellt. Die gedruckten Spulen 5, 6 umfassen jeweils vier gedruckte Spulen 5 für die Fokusregelung sowie zwei gedruckte Spulen 6 für die Spurfolgeregelung. Die eingezeichneten Pfeile kennzeichnen den Stromverlauf innerhalb der gedruckten Spulen 5, 6. Betrachtet man dazu die Magnetisierung der Magnete 4, wie sie in Fig. 5 und Fig. 6 skizziert ist, so ergibt sich die Bewegung des Aktuators 2 nach der "rechte Hand Regel". In Fig. 5 und Fig. 6 sind jeweils nur acht Magnetpole zu sehen. Die zugehörigen Gegenpole befinden sich auf der Rückseite der Magnete 4. Die Fokusspulen 5 können optional auch für eine Kipp-Funktion (Tilt) verwendet werden, indem die Bestromung der Spulen entsprechend gewählt wird.

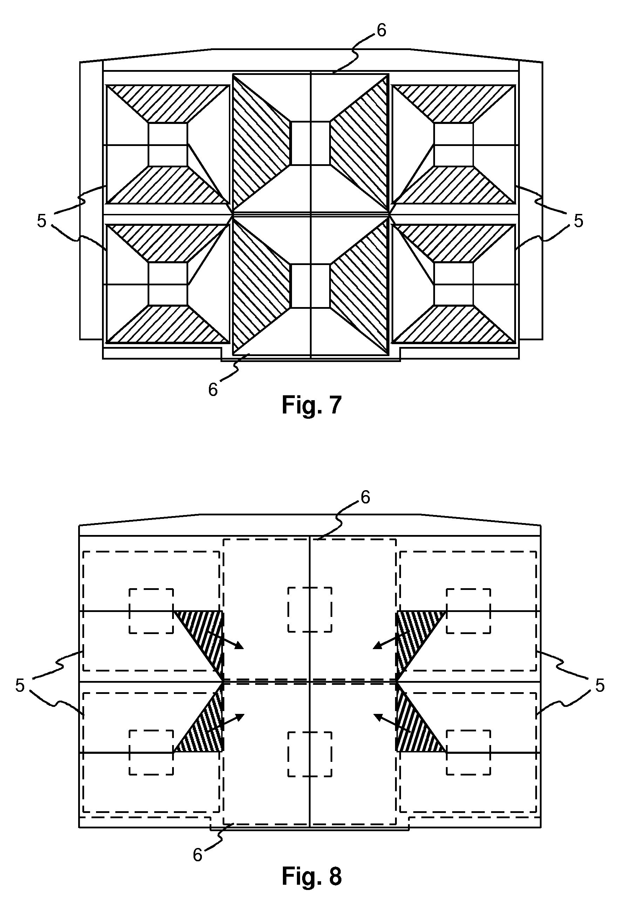

Fig. 7 zeigt die für die Spurfolge- und Fokusregelung tatsächlich relevanten Anteile der gedruckten Spulen 5, 6. Lediglich die schraffierten Flächen tragen zur Bewegung des Linsenhalters 3 bei. Die übrigen Anteile bleiben ungenutzt.

Eine Erläuterung zu abgeschrägten Polteilung gibt Fig. 8. Die abgeschrägte Polteilung stellt eine Optimierung der 16-poligen Magnetisierung dar. Ein Vorteil dieser Ausführung gegenüber einer geraden Polteilung liegt darin, dass die störenden Einflüsse der Magnete für die Fokusspulen 5 auf die danebenliegenden Spurfolgespulen 6 verringert werden. Für jede gewünschte Bewegung wird eine entsprechende Polarisierung der Magnetisierung benötigt. Wenn nun ein entgegengesetzter Magnetpol einwirkt, führt dies automatisch zu Empfindlichkeitsverlusten. Bei gerader Polteilung würden die schraffiert dargestellten Flächen in Pfeilrichtung störend auf die Spurfolgespulen 6 einwirken. Dies wird durch die spezielle Ausgestaltung der Magnetpole verhindert. Berücksichtigt man darüber hinaus, dass für die Fokusspulen 5 wie in Fig. 7 gezeigt nur der obere und untere Teil relevant ist, so führt die abgeschrägte Polteilung zu keinerlei Empfindlichkeitsverlusten bei der Fokusregelung.

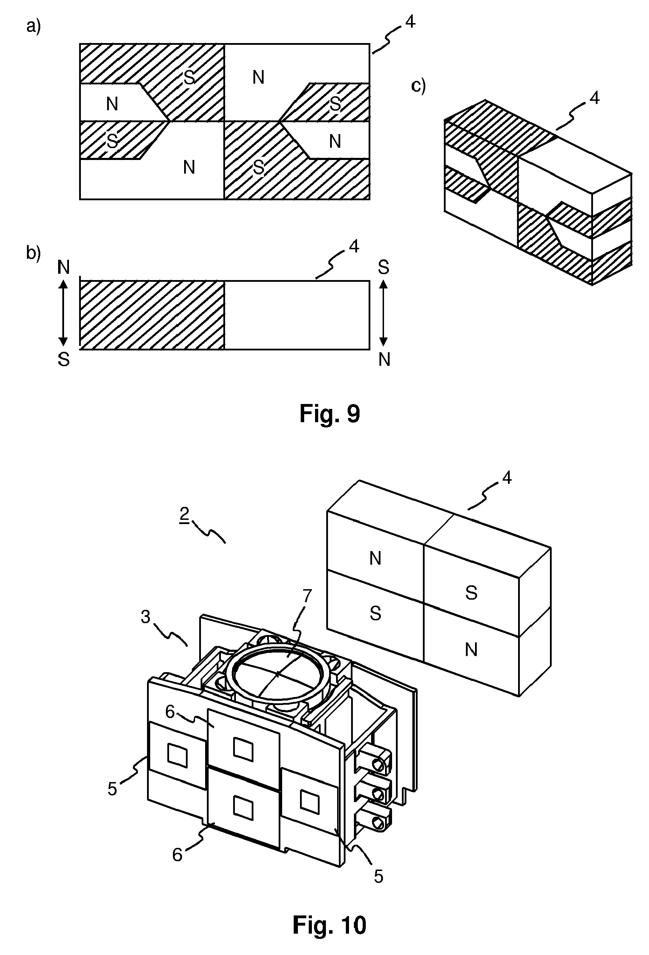

Zur Verdeutlichung zeigt Fig. 9 eine schematische Darstellung der Magnete 4 in Form einer Frontansicht (Fig. 9a)), einer Draufsicht (Fig. 9b)) und einer perspektivischen Ansicht (Fig. 9c)). Aneinandergrenzende Magnetpole mit gegenläufiger Magnetisierung sind dabei durch eine Schraffur hervorgehoben. Die Schraffur bedeutet nicht, dass die Magnete 4 aus separaten Teilen zusammengesetzt sind.

Einen Aktuator 2 gemäß dem Stand der Technik zeigt Fig. 10. Dieser verwendet Magnete 4 mit 8-poliger Magnetisierung, die mit zwei Fokusspulen 5 und zwei Spurfolgespulen 6 zusammenwirken. Wie gut zu sehen ist, wird die für die gedruckten Spulen zur Verfügung stehende Fläche nicht vollständig ausgenutzt. Zudem verursacht die gerade Polteilung störende Einflüsse auf die Spurfolgespulen 6. Insgesamt ergibt sich eine reduzierte Empfindlichkeit des Aktuators 2.

## Patentansprüche

1. Aktuator (2) für einen optischer Abtaster (1), mit einem Linsenhalter (3) zum Halten einer Objektivlinse (7) und gedruckten Spulen (5, 6) zur Fokus- und Spurfolgeregelung, wobei die gedruckten Spulen (5, 6) auf zwei gegenüberliegenden Seiten des Linsenhalters (3) angeordnet sind und mit zugeordneten Magneten (4) zusammenwirken, **dadurch gekennzeichnet, dass** auf den beiden Seiten des Linsenhalters (3) jeweils sechs gedruckte Spulen (5, 6) angeordnet sind und die Magnete (4) jeweils sechzehn Pole haben.

2. Aktuator (2) gemäß Anspruch 1, wobei auf den beiden Seiten des Linsenhalters (3) jeweils vier gedruckte Spulen (5) für die Fokusregelung und jeweils zwei gedruckte Spulen (6) für die Spurfolgeregelung angeordnet sind.

3. Aktuator (2) gemäß Anspruch 2, wobei die gedruckten Spulen (5) für die Fokusregelung auch für eine Kipp-Bewegung des Linsenhalters (3) verwendet werden.

4. Aktuator (2) gemäß einem der Ansprüche 1 bis 3, wobei die Polteilung der Magnete (4) zumindest teilweise schräg zu den für die Spurfolgeregelung vorgesehenen gedruckten Spulen (6) verläuft.

5. Aktuator gemäß einem der Ansprüche 1 bis 4, wobei die Magnete (4) aus jeweils zwei oder mehr miteinander verklebten Teilen bestehen.

6. Gerät zum Lesen und/oder Beschreiben optischer Speichermedien, **dadurch gekennzeichnet, dass** es einen optischen Abtaster (1) mit einem Aktuator (2) gemäß einem der Ansprüche 1 bis 5 verwendet.
